Europäisches Patentamt

European Patent Office

Office européen des brevets

(19)

(11) Numéro de publication : **0 014 143**
**B1**

(12) # FASCICULE DE BREVET EUROPÉEN

(45) Date de publication du fascicule du brevet :
**01.09.82**

(51) Int. Cl.³ : **B 60 K 41/22**

(21) Numéro de dépôt : **80400087.5**

(22) Date de dépôt : **21.01.80**

(54) **Commande de changement de vitesse pour véhicule automobile.**

(30) Priorité : **23.01.79 IT 1952079**

(43) Date de publication de la demande :
**06.08.80 (Bulletin 80/16)**

(45) Mention de la délivrance du brevet :
**01.09.82 Bulletin 82/35**

(84) Etats contractants désignés :
**CH DE FR GB NL SE**

(56) Documents cités :
**DE B 1 163 164**
**DE B 1 224 620**
**FR A 2 078 997**
**US A 3 433 101**
**US A 3 530 668**

(73) Titulaire : **FERRARI Societa per Azioni Esercizio Automobili e Corse**
**Via Abetone, Inf. 2**
**I-41053 Maranello (Modena) (IT)**

**BENDITALIA S.p.A.**
**Via Cavalli 53/A**
**I-26013 Crema (IT)**

(72) Inventeur : **Cadeddu, Leonardo**
**Via Piacenza 29/D**
**I-26013 Crema (IT)**

(74) Mandataire : **Poidatz, Emmanuel et al**
**Service Brevets Bendix 44 rue François 1er**
**F-75008 Paris (FR)**

Imprimerie Jouve, 18, rue St-Denis, 75001 Paris, France

## Commande de changement de vitesse par véhicule automobile

La présente invention a pour objet une commande de changement de vitesse pour véhicule automobile, et elle concerne plus particulièrement une commande de ce genre comprenant un premier organe de commande pour le passage des rapports croissants et un deuxième organe de commande pour celui des rapports décroissants, un vérin à pression de fluide pour l'actionnement de l'embrayage, et un mécanisme de commande de la boîte de vitesses incluant des moyens sensibles à une pression de fluide pour le passage des rapports croissants et pour celui des rapports décroissants comme décrit, par exemple, dans le brevet US-A-3 433 101.

Une telle commande peut trouver notamment son application à bord des voitures de course, pour lesquelles la nécessité d'un passage rapide des vitesses, dans un sens comme dans l'autre, s'impose de toute évidence. Une telle application ne doit cependant pas être considérée comme restrictive de la portée de l'invention.

Afin d'obtenir des temps de réponse aussi courts que possible, l'invention propose que cette commande de changement de vitesse comprenne, en combinaison, un premier distributeur trois voies permettant de relier la chambre active du vérin d'embrayage soit à une source de fluide sous pression soit à un réservoir de retour selon qu'il est ou non excité, un second distributeur quatre voies associé aux moyens sensibles à une pression de fluide, eux-mêmes constitués par deux vérins indépendants, ce second distributeur permettant soit de relier en fonction de l'organe de commande actionné l'un ou l'autre desdits vérins à la source de fluide sous pression à travers la chambre active du vérin d'embrayage et l'autre vérin au réservoir de retour, soit de relier en l'absence d'excitation les deux vérins audit réservoir, ces deux distributeurs étant excités simultanément par l'un ou l'autre des organes de commande et désexcités automatiquement par un moyen de contrôle répondant à la fin d'exécution du passage du rapport désiré, et la liaison à travers la chambre active du vérin d'embrayage ne s'établissant qu'au-delà d'une valeur prédéterminée de la course de son piston qui correspond à la bonne exécution du débrayage. On est ainsi assuré que la manœuvre de passage du rapport ne débute qu'après, et tout de suite après l'accomplissement de la manœuvre de débrayage. La désexcitation automatique des deux distributeurs, entraînant la mise au retour des enceintes sous pression, assure d'autre part une remise à disposition rapide de la commande pour le passage éventuel d'un autre rapport.

Dans une forme préférentielle de réalisation de l'invention, la liaison ci-dessus évoquée à travers la chambre active du vérin d'embrayage s'établit, à travers un passage pratiqué dans le piston lui-même, entre un orifice d'admission du fluide sous pression et une lumière de sortie qui ne communique avec ledit passage que lorsque la course du piston atteint ladite valeur prédéterminée. Il doit être toutefois entendu que le même résultat pourrait être obtenu par d'autres moyens sans sortir pour autant du cadre de l'invention.

De préférence, les organes de commande et les distributeurs sont constitués respectivement par des boutons-poussoirs et par des électrovalves, et en pareil cas le moyen de contrôle répondant à la fin d'exécution du passage du rapport désiré peut être alors simplement constitué par un interrupteur de fin de course actionné par l'un ou l'autre des vérins de commande de la boîte de vitesses.

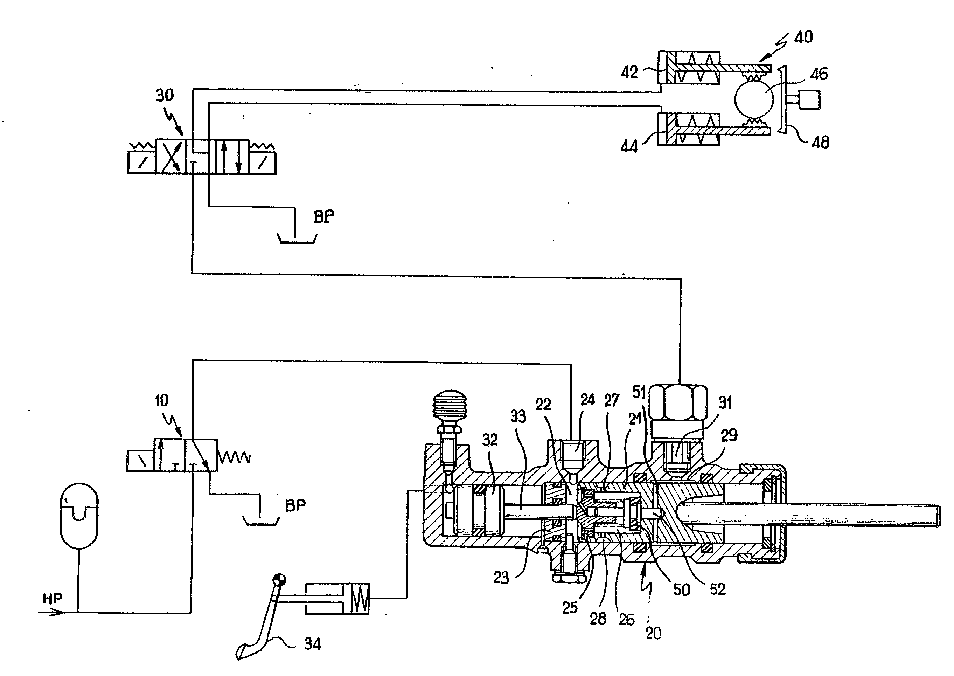

Les caractéristiques et avantages de l'invention ressortiront plus clairement de la lecture de la description suivante d'une forme préférentielle de réalisation, donnée à simple titre d'exemple illustratif et en se référant à l'unique figure du dessin ci-annexé qui en constitue une représentation schématique.

La commande de changement rapide de vitesse selon l'invention comprend un premier distributeur 10, constitué dans l'exemple représenté par une électrovalve à trois voies et à deux positions, dont le mode de fonctionnement sera précisé ci-après. Ce distributeur permet de relier la chambre active 22 d'un vérin hydraulique 20 utilisé pour la commande de l'embrayage (non représenté) du véhicule, soit à une source de fluide sous pression HP lorsque la bobine de commande de ce distributeur est excitée, soit à un réservoir de retour BP lorsque la bobine n'est pas excitée (cas de la position représentée sur le dessin).

La commande comprend également un second distributeur 30, constitué celui-ci par une électrovalve à quatres voies et à trois positions. Ce second distributeur est associé à un mécanisme de commande de la boîte de vitesses, désigné dans son ensemble par le repère 40, ce mécanisme incluant plus précisément deux vérins indépendants 42 et 44, affectés respectivement au passage des rapports croissants et des rapports décroissants ; la structure de ce mécanisme ne fait pas en elle-même partie de l'invention, mais on doit comprendre qu'elle est conçue de façon telle que la mise sous pression de l'un ou de l'autre de ses vérins se traduit par un pas de déplacement angulaire dans un sens ou dans l'autre d'un arbre de sortie 46 qui réalise à l'intérieur de la boîte les couplages désirés ; il s'ensuit que le passage de la première à la quatrième vitesses, par exemple, nécessite trois mises sous pression et hors pression successives du vérin correspondant.

Plus précisément, la position centrale ou position de repos du distributeur 30 est utilisée pour relier les deux vérins 42 et 44 au réservoir de retour BP ; pour cette position, la boîte de vitesses (non représentée sur le dessin) travaille sur le rapport qui lui a été imposé lors d'une précédente manœuvre. Dans l'une ou dans l'autre des deux autres positions, qui sont respectivement commandées par l'actionnement d'une bobine correspondante, le distributeur 30 relie l'un des vérins 42 et 44 à un orifice de sortie 31 du vérin 20 de commande d'embrayage, et l'autre vérin au réservoir de retour BP.

La commande de changement de vitesse selon l'invention comprend enfin deux organes de commande affectés l'un au passage des rapports croissants et l'autre à celui des rapports décroissants. Ces organes de commande, qui ne sont pas représentés sur le dessin, peuvent être avantageusement constitués par des boutons-poussoirs montés sur le volant du véhicule, ceci de manière à permettre au pilote de commander d'un doigt et sans avoir à lâcher le volant le passage du rapport désiré. L'un de ces boutons-poussoirs permet, lorsqu'il est enfoncé, d'alimenter simultanément la bobine d'excitation du premier distributeur 10 et l'une des bobines d'excitation du second distributeur 30 ; de manière analogue, le second bouton-poussoir commande par son enfoncement l'alimentation de la bobine d'excitation du premier distributeur 10 et de l'autre bobine d'excitation du second distributeur 30. L'enfoncement de l'un ou de l'autre de ces boutons-poussoirs a pour effet de maintenir les distributeurs dans leurs positions respectives de travail jusqu'à ce que le vérin correspondant 42 ou 44 ait parcouru une course complète, assurant ainsi la réalisation du couplage désiré. La fin de cette manœuvre peut être avantageusement constatée par un interrupteur de fin de course 48 qui est actionné lorsque l'un ou l'autre des pistons des vérins 42 ou 44 parvient au terme de sa course. L'interrupteur 48 émet alors un signal de fin d'exécution qui provoque, par l'intermédiaire d'un dispositif de commande électronique non représenté, la mise hors tension simultanée des bobines des deux distributeurs 10 et 30.

Selon une variante de l'invention, il est possible d'obtenir un autre mode de fonctionnement grâce à un dispositif de commande électronique réalisé de telle manière que l'actionnement de l'interrupteur 48 provoque la mise hors tension de la bobine du distributeur 30 tandis que la mise hors tension de la bobine du distributeur 10 qui provoque la remise en service de l'embrayage ne s'effectue que lors du relâchement du bouton-poussoir considéré, à l'instant choisi par le pilote.

Considérant à présent plus particulièrement le vérin 20 d'actionnement de l'embrayage, on voit que celui-ci comprend un piston creux 21 délimitant avec une cloison fixe 23 une chambre active 22 qui communique avec un orifice d'admission 24 pour le fluide sous pression. Par l'intermédiaire de perçages longitudinaux 25, d'une cavité interne 26, et de perçages radiaux 27, le piston 21 met en communication la chambre active 22 du vérin avec une gorge périphérique 28. L'orifice de sortie 31 du vérin communique d'autre part avec une lumière percée dans son corps fixe et prolongée par une rainure longitudinale 29 dont l'extrémité gauche est normalement éloignée de la gorge 28 et en est séparée par un joint torique d'étanchéité ; l'espacement entre cette extrémité et cette gorge est déterminé de façon telle que, lorsque le piston 21 est repoussé vers la droite sous l'action du fluide sous pression, la communication entre la gorge et la rainure ne s'établisse qu'une fois accomplie une valeur minimale de la course du piston correspondant à un débrayage effectif de l'embrayage. La rainure 29 communique d'autre part, par l'intermédiaire d'un perçage diamétral 51 et d'un perçage axial 52, avec la cavité interne 26 du piston 21 ; toutefois, cette communication est contrôlée par un clapet unidirectionnel 50 qui ne laisse passer le fluide sous pression que dans le sens allant de l'orifice de sortie 31 à la cavité 26 du piston, et par conséquent à la chambre active 22 ; à l'examen du dessin on remarque que, sous réserve que le clapet 50 soit ouvert, le passage auxiliaire ainsi pratiqué dans le piston 21 établit une communication qui est indépendante de la position du piston. Le clapet 50 joue essentiellement un rôle de protection contre les surpressions transitoires risquant d'apparaître en aval du vérin 20 lors de l'exécution des manœuvres. Le vérin 20 comporte enfin un second piston d'actionnement 32, monté en série avec le piston 21 sur lequel il prend appui par une tige de poussée 33 traversant de façon étanche la cloison fixe 23 ; ce piston 32 n'est actionné qu'en réponse à une manœuvre volontaire de la pédale d'embrayage 34, et doit normalement n'être considérée que comme un moyen de secours.

Le dispositif ci-dessus décrit fonctionne de la manière suivante :

Lorsque le pilote de la voiture désire passer à un rapport de valeur supérieure, il enfonce le bouton-poussoir correspondant, ce qui a pour effet d'exciter simultanément la bobine du premier distributeur 10 et l'une des bobines du second distributeur 30, autorisant par exemple l'alimentation du vérin 42. L'actionnement du premier distributeur 10 a pour effet d'alimenter en fluide sous pression la chambre active 22 du vérin d'embrayage 20, et la pression qui s'exerce dès cet instant sur le piston 21 provoque son déplacement vers la droite, avec pour conséquence le débrayage des plateaux de l'embrayage. Le fluide sous pression emplit simultanément la cavité interne 26 et parvient à la gorge périphérique 28, tout en maintenant d'autre part le clapet 50 appliqué sur son siège ; il en résulte que le fluide sous pression ne peut atteindre la rainure 29, et par conséquent l'orifice de sortie 31, que lorsque le piston aura effectué une course minimale garantissant la bonne exécution du débrayage. C'est seulement à partir de cet instant que le fluide sous pression parvient à l'entrée du second distributeur 30 et de là, au vérin 42. Le piston de ce dernier se déplace alors vers la droite du dessin, imprimant à l'arbre de sortie 46 un pas de déplacement angulaire assurant le couplage désiré. Au terme de cette manœuvre, l'interrupteur de fin de course 48 se trouve actionné et désexcite simultanément les bobines des deux distributeurs. Le fluide contenu dans la chambre active du vérin 42 se trouve alors refoulé sous l'action de son ressort de rappel vers le réservoir de retour, à travers le second distributeur 30 dont le tiroir a repris sa position de repos représentée sur le dessin. De même, le piston 21 du vérin d'embrayage 20 revient vers sa position de repos sous l'action du ressort de rappel de l'embrayage, refoulant devant lui le fluide contenu dans la chambre active 22, lequel est retourné au réservoir BP à travers le premier distributeur 10, lui aussi revenu à sa position de repos. Une éventuelle surpression transitoire qui apparaîtrait lors de cette manœuvre dans la ligne reliant l'orifice de sortie 31 du vérin 20 au second distributeur 30 provoquerait le soulèvement du clapet 50, et se trouverait ainsi éliminée de façon simple et efficace.

Il va de soi que les manœuvres se succéderaient de façon similaire dans le cas où le pilote actionnerait l'autre organe de commande mis à sa disposition, ce qui provoquerait alors l'intervention de l'autre vérin 44 affecté au passage des rapports décroissants.

Grâce à l'emploi de moyens de commande à réponse rapide ainsi qu'aux moyens mis en œuvre pour commander l'intervention du mécanisme 40 dès qu'est constatée la bonne exécution de la manœuvre de débrayage, il est possible d'obtenir des changements de rapports en un temps extrêmement court, impossible à atteindre en commande manuelle. Par ailleurs, un succession rapide de pressions sur les boutons-poussoirs de commande permet de parcourir en un temps extrêmement réduit toute la gamme des rapports disponibles, ceci aussi bien lors des manœuvres d'accélération que de décélération du véhicule.

En cas de défaillance de l'un ou l'autre des composants du dispositif de commande ci-dessus décrit, le conducteur conserve enfin la possibilité d'intervenir manuellement, en se servant de la pédale d'embrayage classique 34 et d'un levier de passage de vitesses.

**Revendications**

1. Commande de changement rapide de vitesse pour véhicule automobile, comprenant un premier organe de commande pour le passage des rapports croissants et un deuxième organe de commande pour celui des rapports décroissants, un vérin à pression de fluide (20) pour l'actionnement de l'embrayage, et un mécanisme de commande (40) de la boîte de vitesses incluant des moyens (42, 44) sensibles à une pression de fluide pour le passage des rapports croissants et pour celui des rapports décroissants, caractérisée par le fait qu'elle comprend, en combinaison, un premier distributeur trois voies (10) permettant de relier la chambre active (22) du vérin d'embrayage (20) soit à une source de fluide sous pression soit à un réservoir de retour selon qu'il est ou non excité, un second distributeur quatre voies (30) associé auxdits moyens (42, 44) sensibles à une pression de fluide, eux-mêmes constitués par deux vérins (42, 44) indépendants, ce second distributeur (30) permettant soit de relier en fonction de l'organe de commande actionné l'un ou l'autre desdits vérins (42, 44) à la source de fluide sous pression à travers la chambre active (22) du vérin d'embrayage (20) et l'autre vérin (42, 44) au réservoir de retour, soit de relier en l'absence d'excitation les deux vérins (42, 44) audit réservoir, ces deux distributeurs (10, 30) étant excités simultanément par l'un ou l'autre des organes de commande et désexcités automatiquement par un moyen de contrôle répondant à la fin d'exécution du passage du rapport désiré, et la liaison à travers la chambre active (22) du vérin d'embrayage (20) ne s'établissant qu'au-delà d'une valeur prédéterminée de la course de son piston (21) qui correspond à la bonne exécution du débrayage.

2. Commande de changement de vitesse selon la revendication 1, caractérisée par le fait que la liaison à travers la chambre active (22) du vérin d'embrayage (20) s'établit, à travers un passage pratiqué dans le piston (21) lui-même, entre un orifice d'admission du fluide (24) sous pression et une lumière de sortie (31) qui ne communique avec ledit passage que lorsque la course du piston (21) atteint ladite valeur prédéterminée.

3. Commande de changement de vitesse selon la revendication 2, caractérisée par le fait qu'est pratiqué dans le piston (21) un passage auxiliaire (52) mettant en communication la chambre active (22) avec ladite lumière de sortie (31) quelle que soit la position du piston (21), ce passage auxiliaire (52) étant lui-même commandé par un clapet unidirectionnel de sécurité (50) n'autorisant le passage du fluide qu'en cas de surpression du côté de la sortie.

4. Commande de changement de vitesse selon l'une quelconque des revendications 1 à 3, et dans laquelle les organes de commande et les distributeurs sont constitués respectivement par des boutons-poussoirs et par des électrovalves, caractérisée par le fait que le moyen de contrôle répondant à la fin d'exécution du passage du rapport désiré est constitué par un interrupteur de fin de course (48) actionné par l'un ou l'autre des vérins de commande (42, 44) de la boîte de vitesses.

**Claims**

1. A speed change control for a motor vehicle, comprising a first control member for the passage of increasing speed ratios and a second control member for the passage of decreasing speed ratios, a fluid pressure actuated motor (20) for actuating the clutch, and a control mechanism (40) of the gear box, including means (42, 44) responsive to a pressure fluid for passing increasing speed ratios and for passing decreasing speed ratios, characterized in that it comprises, in combination, a three-way-valve (10) allowing to connect the active chamber (22) of said clutch motor (20) either to a pressure fluid source or to a reservoir, depending on whether it has been excited or not, a four-way-valve (30) associated to said means (42, 44) responsive to a fluid pressure, said means being comprised of a pair of independent fluid motors (42, 44), the four-way-valve (30) allowing either to connect, according to the actuated member, one of said fluid motors (42, 44) to the fluid pressure source via the active chamber (22) of the clutch motor (20) and the other fluid motor (42, 44) to the reservoir, or to connect both fluid motors (42, 44) to the reservoir if no control member has been actuated, both of said valves (10, 30) being excited simultaneously by the one or other of said control members and being automatically de-excited by control means responsive to termination of passing the desired speed ratio, and the connection via the active chamber (22) of the clutch motor (20) being established only above a predetermined value of the stroke of its piston (21) corresponding to a complete clutch operation.

2. The speed change control according to claim 1 characterized in that said connection via the active chamber (22) of the clutch motor (20) is established through a passage formed in the piston (21) itself between an orifice for admission of a pressure fluid (24) and an outlet slot (31) communicating with said passage only if the stroke of the piston (21) has attained said predetermined value.

3. The speed change control according to claim 2 characterized in that in said piston (21) an auxiliary passage (52) has been formed to communicate the active chamber (22) and said outlet slot (31) irrespective to the position of the piston (21), said auxiliary passage (52) being controlled by a one-way-valve (50) allowing for a passage of fluid only in case of an overpressure at the outlet side.

4. A speed change control according to any of claims 1 to 3, in which said control members and said valves are formed by push buttons and by solenoid valves, respectively, characterized in that said control means responsive to termination of passing the desired speed ratio is formed by a limit switch (48) actuated by one or the other of said fluid motors (42, 44) of the gear box.

**Ansprüche**

1. Wechselgetriebe-Steuerung für Kraftfahrzeuge, mit einem ersten Steuerorgan zum Hochschalten und einem zweiten Steuerorgan zum Herunterschalten, einem Druckmittelmotor (20) zum Betätigen der Kupplung, und einer Steuereinrichtung (40) für das Getriebe mit Fühlmitteln (42, 44), die auf einen Strömungsmitteldruck zum Hochschalten und zum Herunterschalten ansprechen, dadurch gekennzeichnet, daß es, in Kombination, aufweist: ein Dreiwegeventil (10), über das die aktive Kammer (22) des Stellmotors (20) der Kupplung je nach Betätigung an der Kupplung oder einem Reservoir anschließbar ist, ein Vierwegeventil (30), das den Fühlmitteln (22, 44) zugeordnet ist, wobei die Fühlmittel von zwei unabhängigen Stellmotoren (42, 44) gebildet werden, daß das Vierwegeventil (30) dazu dient, entweder in Abhängigkeit von einer Betätigung eines der Steuerorganen den einen oder anderen der Stellmotoren (42, 44) über die aktive Kammer (22) des Stellmotors (20) der Kupplung mit der Druckmittelquelle und den anderen Stellmotor (42, 44) mit dem Reservoir zu verbinden, oder aber bei fehlender Betätigung die beiden Stellmotoren (42, 44) mit dem Reservoir zu verbinden, wobei die beiden Wegeventile (10, 30) gleichzeitig von dem einen oder anderen Steuerorgan erregt werden und über eine Steuereinrichtung, die auf das Ende des gewünschten Gangwechsels anspricht, selbsttätig entregt werden, und daß die Verbindung durch die aktive Kammer (22) des Stellmotors (20) der Kupplung erst oberhalb eines vorgegebenen Wertes der Bewegung seines Kolbens (21) zum Sicherstellen eines einwandfreien Entkuppelns zustandekommt.

2. Wechselgetriebe-Steuerung nach Anspruch 1, dadurch gekennzeichnet, daß die Verbindung durch die aktive Kammer (22) des Stellmotors (20) der Kupplung über einen in den Kolben (21) des Stellmotors eingearbeiteten Kanal zwischen einer Einlaßöffnung (24) für Druckmittel und einem Auslaßschlitz (31) zustandekommt, der mit dem Kanal erst in Verbindung tritt, wenn der Kolben (21) bei seiner Bewegung den vorgegebenen Wert erreicht.

3. Wechselgetriebe-Steuerung nach Anspruch 2, dadurch gekennzeichnet, daß in den Kolben (21) ein Hilfskanal (52) eingearbeitet ist, der die aktive Kammer (22) unabhängig von der Stellung des Kolbens (21) mit dem Auslaßschlitz (31) verbindet, wobei der Hilfskanal (52) seinerseits von einem Einwegeventil (50) gesteuert wird, der einen Durchtritt des Strömungsmittels nur bei Überdruck auf Auslaßseite zuläßt.

4. Wechselgetriebe-Steuerung nach einem der Ansprüche 1 bis 3, bei der die Steuerorgane von Druckknöpfen gebildet werden und die Wegeventile Elektroventile sind, dadurch gekennzeichnet, daß die auf das Ende des gewünschten Gangwechsels ansprechende Steuereinrichtung von einem Grenzschalter (48) gebildet wird, der vom einen oder anderen Stellmotor (42, 44) zur Steuerung des Getriebes betätigt wird.